# EUROPEAN PATENT APPLICATION

(11) **EP 0 724 130 A1**
(43) Date of publication of application: **31.07.1996**
(21) Application number: 96300448.6
(22) Date of filing: 23.01.1996
(51) Int. Cl.: F41G 7/22

(54) **System and method for cluster recognition**

(30) Priority: 24.01.1995 IL 11243695
(71) Applicant: STATE OF ISRAEL MINISTRY OF DEFENCE RAFAEL ARMAMENT DEVELOPMENT AUTHORITY, Haifa 31 021 (IL)
(72) Inventor: Garten, Haim, Haifa (IL); Friedler, Osnat, Kyriat Motzkin (IL); Tal Yoram, Haifa (IL)
(74) Representative: Pawlyn, Anthony Neil

(57) **Abstract**

A target or object recognition system is provided which operates on an array of images of a scene in which there are targets or objects. The system includes an automatic target recognition unit (20) and a cluster recognizer (22). The automatic target recognition unit (20) recognizes possible targets (objects) in each of said images and provides each possible target (object) with a cluster grade. The cluster recognizer (22) receives a list of the possible targets (objects) from the automatic target recognition unit (20) and identifies clusters of possible targets (objects) which are located within a small area and which all have cluster grades above a predefined threshold.

## Description

### FIELD OF THE INVENTION

The present invention relates generally to automatic target recognition units and to automatic cluster recognition units in particular.

### BACKGROUND OF THE INVENTION

Automatic target recognition units are known in the art and are described, for example, by the following articles, all of which are incorporated herein by reference:
D.E. Kreithen et al: "Discriminating Targets from Clutter", The Lincoln Lab Journal Vol. 6 No.1, 1993;
A.M. Waxman et al: "Neural Systems for Automatic Target Learning and Recognition", The Lincoln Lab Journal Vol. 6 No. 1, 1993;
J.F. Gilmore: "Knowledge Based Target Recognition System Evolution", Optical Engineering Vol. 30 No. 5, May 1991;
J.F. Gilmore & A.J Czuchry Jr.: "Target Detection in Neural Network Environment" Application of Artificial Intelligence VIII SPIE Vol. 1293, 1990;
H. Naser et al: "Intelligent Target Recognizers", Scientific Honevweller Vol. 9 No. 1, Summer 1988;
M.W. Roth: "Survey of Neural Technology for Automatic Target Recognition" IEEE Transactions on Neural Networks Vol.1 No. 1, March 1990;
A. Katz and P. Thrift: "Hybrid Neural Network Classifiers for Automatic Target detection", Expert Systems, Vol. 10 No. 4, November 1993; and
P.A.Molley & B.A.Kast: "Automatic Target Recognition and Tracking Using an Acousto-optic Image Correlator", Optical Engineering Vol. 31 No.9, May 1992.

In general, automatic target recognition units review a scene in which there might be targets and indicate to an operator where possible targets are to be found. The operator then must check each possible target to determine if it is, in fact, a target.

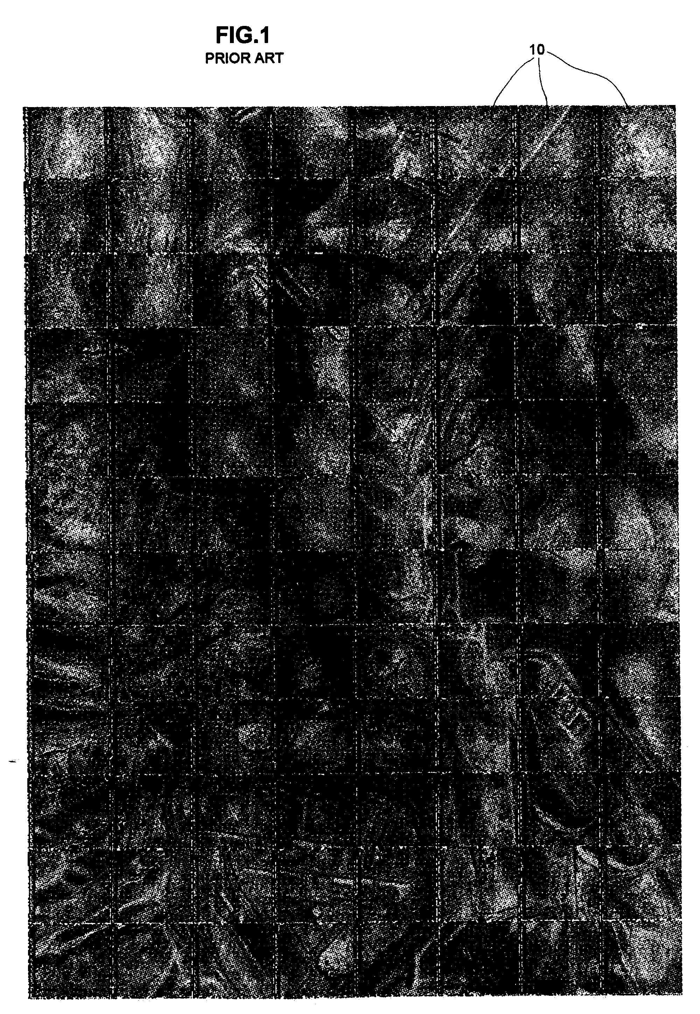

The scene is initially scanned by a camera and a mosaic of narrow field of view images, covering the whole scene, is produced. For example, Fig. 1, to which reference is now made, illustrates the scene, which has a wide field of view, and the mosaic of images 10 into which it is divided. The images 10 are typically of very high resolution; however, in Fig. 1 they are displayed at a low resolution.

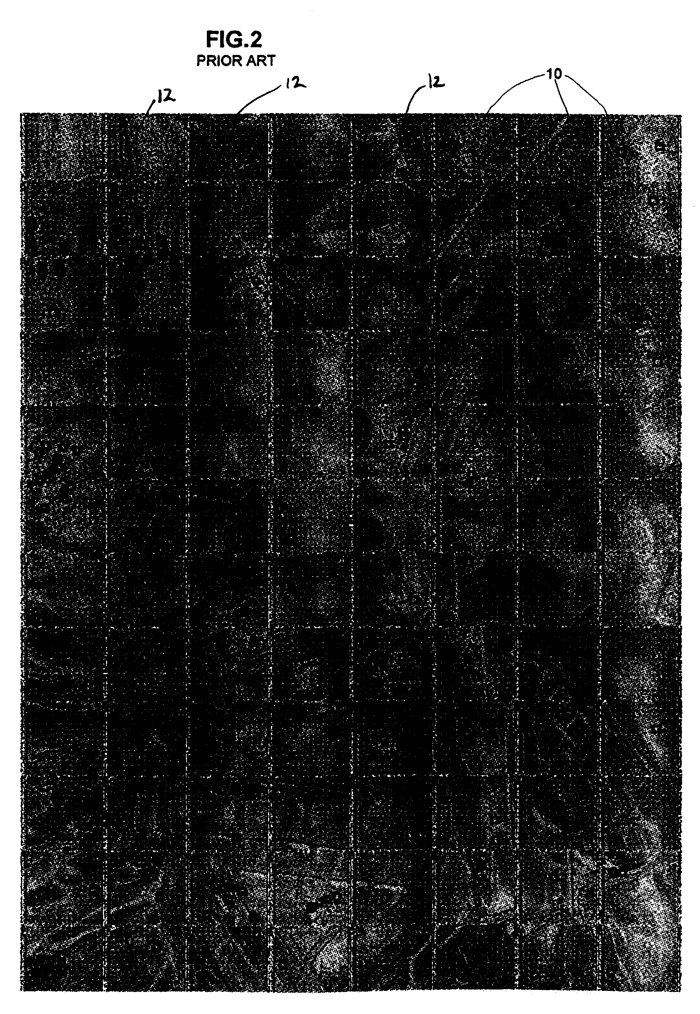

The automatic target recognition units review the multiplicity of images 10 and determine, through feature identification methods as described in the articles listed above, where in the scene there are features which are similar to the features of the targets to be identified. The features are graded as to how closely they resemble the features of the target and those whose "quality of recognition" grades are above a threshold, are provided as possible targets. The possible targets are typically noted to the user by marking the display of the scene. This is shown in Fig. 2 to which reference is now made. In Fig. 2, the possible targets are noted by small squares 12.

As can be seen in Fig. 2, many possible targets were found, even though only a few of them are actual targets. Since, when presented to the operator, each possible target is equivalent to the next, the operator has to check every possible target. Since a possible target was found in practically every image 10, the operator will have to view each image at full resolution and thus, has gained little by using the automatic target recognition unit.

The automatic target recognition unit can reduce the number of targets found, by changing the feature extraction method or the threshold by which it determines what is a possible target. However, it does so at the risk of missing some real targets. Thus, most automatic target recognition units are designed to find false targets ("false positives") but not to miss any real targets (i.e. no "false negatives" or "misdetections").

### SUMMARY OF THE PRESENT INVENTION

It is therefore an object of the present invention to provide an automatic target recognition system which finds few false targets and also has no false negatives. To that end, Applicant has realized that, in many cases, it is desired to identify targets which operate in groups. Thus, if it is desired to find tanks, they will be found either in a moving convoy or grouped together in a "parking lot". If it is desired to find encampments, the encampment will typically include a plurality of tents as well as vehicles. Thus, the recognition system can be improved by insisting that only clusters of possible targets be found.

Furthermore, the cluster recognition unit utilizes the fact that a group of possible targets which are "real" targets, as opposed to artifacts which have some features which match the identifying features, will be successfully identified by the feature identification method of the automatic target recognition system. Thus, any cluster having many high "match" grades most likely is a cluster of "real" targets. By considering only clusters of targets, the present invention filters out most of the false targets and the operator can thus focus on the areas where true targets have been found.

The present invention is also operative on any scene having a large multiplicity of objects therein. Such a scene might be that of the sky and the object being recognized is a certain pattern of stars or stars of a certain brightness. Alternatively, the scene might be that of a portion of the earth or sea in which a group of animals or people are lost. The objects to be recognized are the lost animals or people.

There is therefore provided, in accordance with a preferred embodiment of the present invention, a target or object recognition system operating on an array of images of a scene in which there are targets (objects). The system includes an automatic target recognition unit and a cluster recognizer. The automatic recognition unit recognizes possible targets (objects) in each of said images and provides each possible target (object) with a cluster grade. The cluster recognizer receives a list of the possible targets (objects) from the automatic target recognition unit and identifies clusters of possible targets (objects) which are located within a small area and which all have cluster grades above a predefined threshold.

Additionally, the cluster recognizer includes a) reviews a window of said images and a predetermined number X of possible targets in the window which have the highest grades, b) generates an average cluster grade of the window, wherein the window is slid across the array until the entire scene has been reviewed, c) stores the X selected possible targets in each position of the window, d) generates a histogram of the average cluster grades produced for each position of the window, e) selects the windows having average cluster grades above the average cluster grade of the histogram and f) determines if there are any clusters among the selected windows.

### BRIEF DESCRIPTION OF THE DRAWINGS

The present invention will be understood and appreciated more fully from the following detailed description taken in conjunction with the drawings in which:
Fig. 1 is a photographic illustration of a scene in which there are targets to be identified;
Fig. 2 is a photographic illustration of the scene of Fig. 1 in which possible targets have been identified and marked;
Fig. 3 is a block diagram illustration of a cluster recognition unit, constructed and operative in accordance with a preferred embodiment of the present invention;
Fig. 4A is a schematic illustration of the marked scene in Fig. 2 in which clusters of targets have been marked;
Fig. 4B is a blown up illustration of an identified section of Fig. 4A;
Fig. 5 is a flow chart illustration of a cluster recognition method useful in the unit of Fig. 3;
Fig. 6 is a schematic illustration defining the windows used in the method of Fig. 5;
Fig. 7 is a schematic illustration of a histogram, useful in understanding the method of Fig. 5;
Fig. 8 is a schematic illustration of the joining of windows, useful in understanding the method of Fig. 5.

### DETAILED DESCRIPTION OF A PREFERRED EMBODIMENT

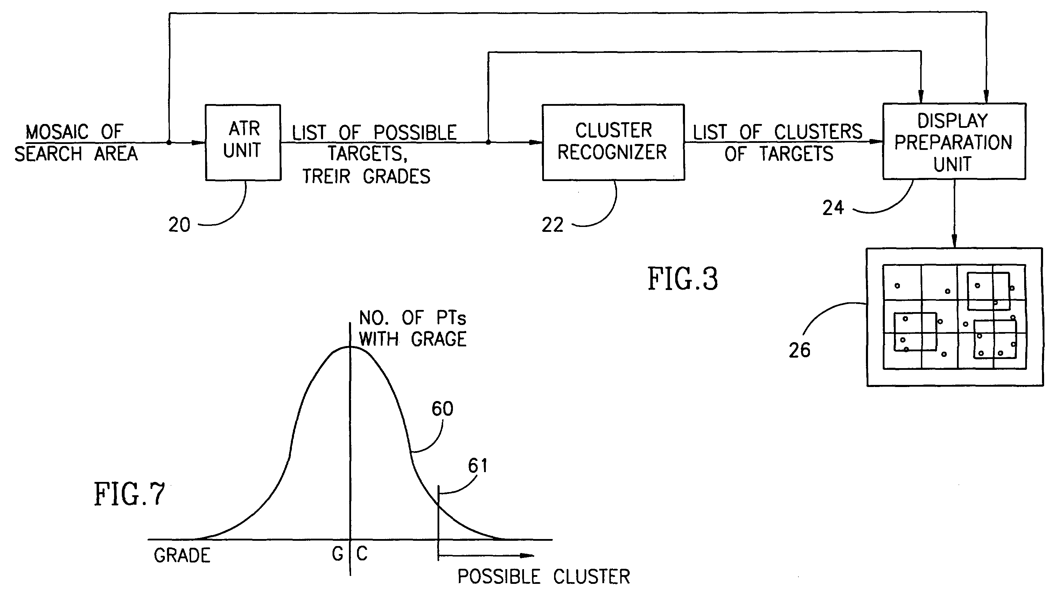

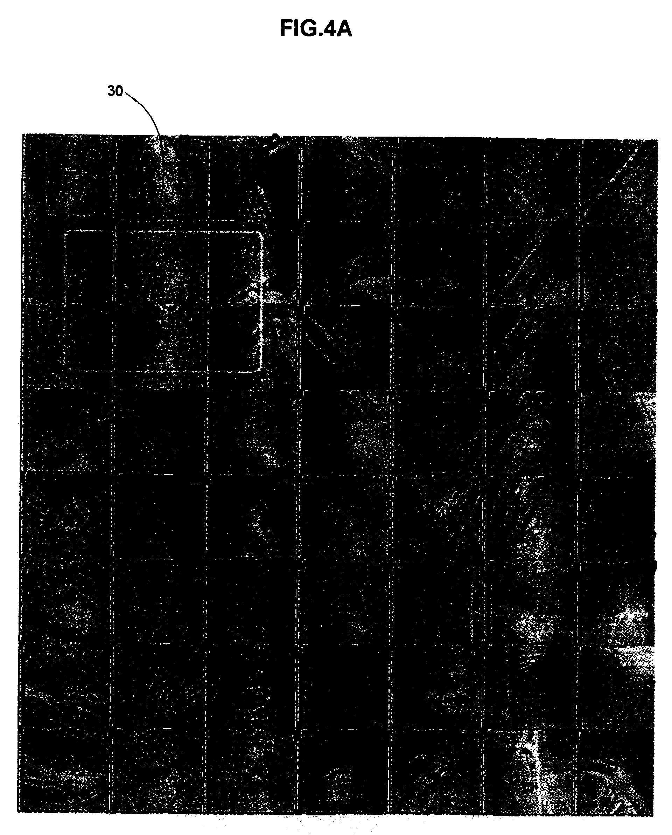

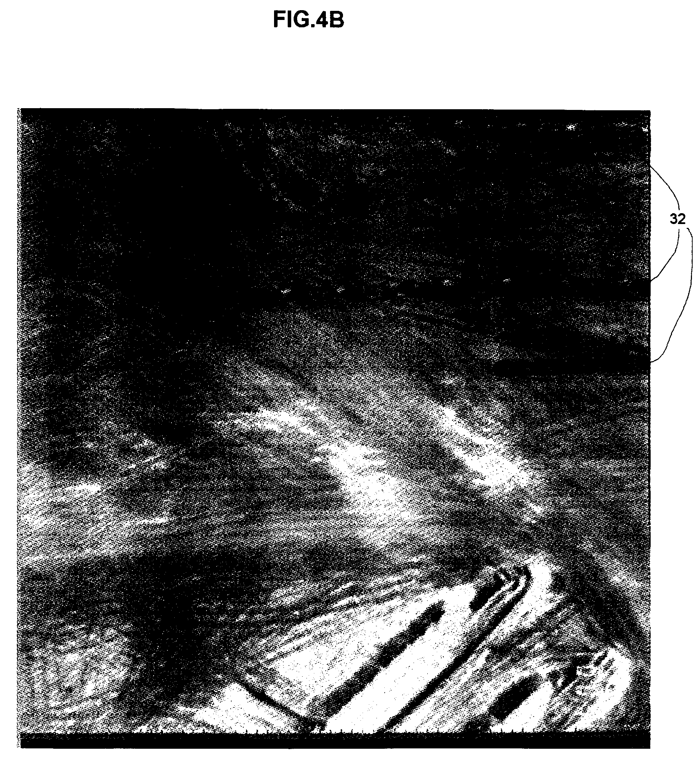

Reference is now made to Fig. 3 which illustrates a cluster recognizing unit, constructed and operative in accordance with a preferred embodiment of the present invention, to Fig. 4A which illustrates its output and to Fig. 4B which is a blow up of a portion of the scene in which "real targets" have been identified.

The cluster recognizing unit comprises an automatic target recognizing (ATR) unit **20**, a cluster recognizer **22**, and a display preparation unit **24** which prepares the output to be displayed on a display **26**. The ATR unit **20** can identify any type of object, whether they be military targets or civilian objects. The remaining discussion will utilize the term "target" as that is the term typically used in the field.

The ATR unit **20** receives the mosaic of images **10**, determines where the possible targets are and provides their quality of cluster grades, known herein as "ATR grades". The cluster recognizer **22** reviews the position and grade information provided by the ATR unit **20** and determines where there are clusters of possible targets whose grades are all significantly higher than the average, called herein "cluster grades". The display preparation unit **24** receives the mosaic of images as shown in Fig. 1, the list of all possible targets produced by the ATR unit **20**, and from the cluster recognizer **22**, the list of clusters with the possible targets within them. The display preparation unit **24** then displays, on display **26**, the mosaic overlaid by the markings of the possible targets overlaid by a marking of clusters of interest.

An exemplary display, for the scene of Figs. 1 and 2, is shown in Fig. 4A. A single cluster **30** has been found. The possible targets therein are marked with T's rather than squares as in Fig. 2. When, as shown in Fig. 4B, cluster **30** is viewed at higher resolution it is seen to contain real targets therein. Fig. 4B shows the lower right portion of cluster **30** and indicates that three convoys of vehicles **32** are detected.

It will be appreciated that the cluster recognizing unit of the present invention reviews the myriad possible targets identified by the ATR unit **20** and determines which groups of possible targets are most likely to be real targets. Thus, the present invention reduces the number of portions of the scene which an operator has to view in order to identify real targets.

The ATR unit **20** can be any unit performing ATR, either according to the methods described in the articles listed hereinabove or by any other target recognition method, as long as it identifies possible targets and provides their locations and classification grades.

The display preparation unit **24** can be any unit which can overlay possible target markings (squares), actual target markings (T's) and cluster markings over a mosaic of low resolution images.

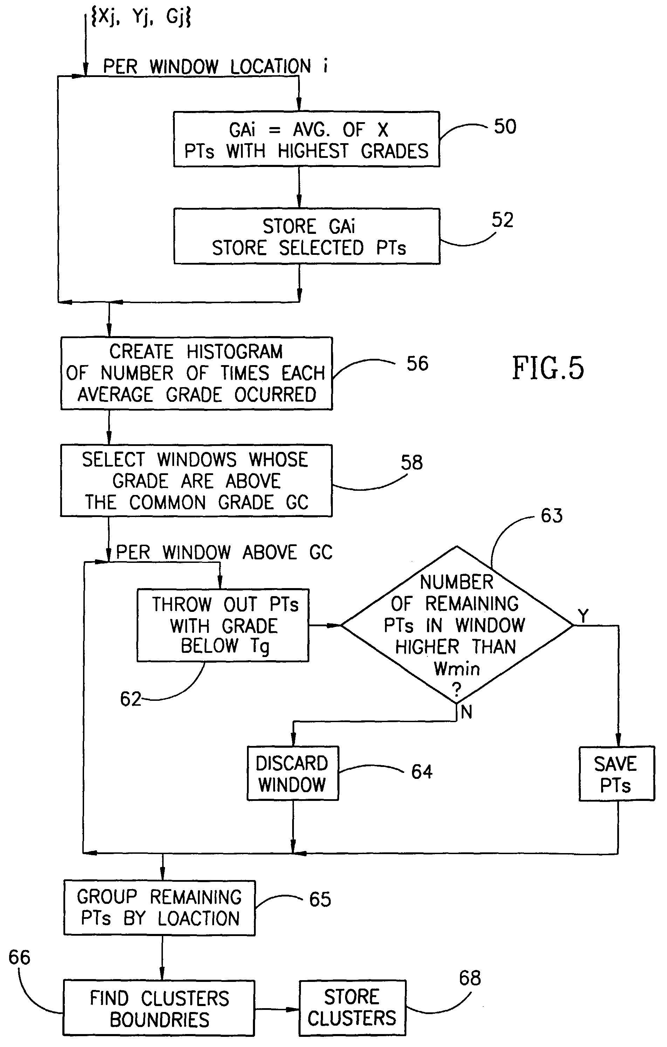

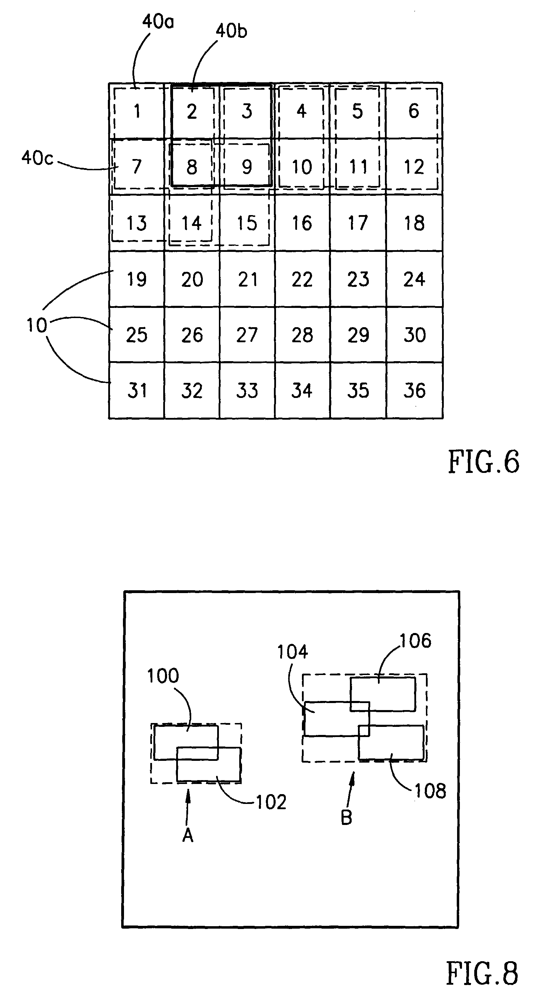

The operations of the cluster recognizer **22** are detailed in Fig. 5, to which reference is now made. Reference is now also made to Figs. 6, 7 and 8 which are useful in understanding the method outlined in Fig. 5.

The cluster recognizer **22** reviews the scene by sliding a window across the scene, looking at a number of images **10** at one time. The size of the window is dependent on the size of the expected cluster of targets. When looking for five tanks, the window corresponds to an imaged area of 150 x 150 meters.

Fig. 6 illustrates an exemplary scene mosaic of **36** images whose images **10** are numbered. The window, labeled **40**, is two images by two images square and is moved to the right one column at a time. Thus, the first location of the window, labeled **40a**, is over images 1, 2, 7 and 8 and the second location of the window, labeled **40b**, is over images 2, 3, 8 and 9. For the purposes of clarity in the drawing, the locations of window **40** are marked by dotted lines within the images **10** which they include.

Once the row is finished, the window **40** is moved down one row and the process repeated. Thus, the first location of the window, labeled **40c**, covers images 7, 8, 13 and 14.

For each window location, the possible targets with the highest grades are found, as follows:
a) The possible targets (PTs) within the window **40** are reviewed (step **50**) and the X largest grades Gⱼ are averaged together to produce GAᵢ. X is typically 3 - 5.
b) The position (xⱼ, yⱼ) and ATR grade Gⱼ of the possible targets included in the average GAᵢ are stored (step **52**), as is the average GAᵢ.

In step **56**, the cluster recognizer **22** creates a histogram of the selected grades GAⱼ, indicating which grades GAⱼ, of the windows, were most common. Fig. 7 illustrates an exemplary histogram **60** with the most common grade, GC, marked.

It is noted that the histogram indicates the statistics for all possible "clusters" (i.e. for the windows) which are in the scene being viewed. Since the average grade of a cluster is likely to be high (since a cluster is defined as a window all of whose possible targets have a high ATR grade), one need consider only those windows whose average grades are considerably higher than the common grade.

Therefore, in step **58**, the least common, but high, grades for a window are noted. These are typically the grades which are higher (typically by 0.5 to three standard deviations) than the common grade GC. The possible targets associated with these windows might belong to a cluster and therefore, their locations are noted. This action is noted in Fig. 7 by the line **61**.

If there are no targets in a scene, then the grades Gⱼ of the possible targets found in step **58** would be quite low. Therefore, in step **62**, the values of the grades of the possible targets per window are reviewed to ensure that they are above a threshold Tg indicating the expected minimal grade of a real target. Those whose grades are too low are thrown out and only those above the threshold Tg are utilized.

In step **63**, the number of remaining possible targets in each window are checked against a minimum value Wmin. If this minimum requirement is not fulfilled for a window, then that window is discarded in step **64** and another window is checked, beginning at step **62**.

All pairs of overlapping windows which survived step **63** are then merged, in step **64**, into contiguous areas. All of the possible targets belonging to each such area are grouped into a single cluster. For example, Fig. 8 illustrates five remaining windows **100**, **102**, **104**, **106** and **108** which survived step **63** (i.e. which contain at least Wmin possible targets whose grades are at least Tg). In step **65**, windows **100** and **102** are merged together into an area A and windows **104**, **106** and **108** are merged together into an area B.

In step **66**, all of the possible targets belonging to a single contiguous area, such as areas A and B, are marked as a unique cluster. The boundaries of each cluster, such as clusters A and B, are then calculated from the extremum locations of its constituent possible targets.

In step **68**, the locations of the possible targets of each cluster and the boundaries of the clusters are stored and the process repeated until all of the possible clusters have been reviewed.

The display preparation unit **24** displays the received target locations bounded by a frame defined by the boundaries of its cluster. The frames are then laid over the display of the mosaic and of the markings of the possible targets.

It will be appreciated that the system and method described hereinabove reduces the numbers of false positives since most of the false positives are not grouped into a cluster having a large enough average grade. It is noted that the common grade GC is the statistical "clustering" value of the environment in which the targets are and thus, any grade reasonably above the common grade GC indicates a cluster of "real" targets.

It will be appreciated by persons skilled in the art that the present invention is not limited to what has been particularly shown and described hereinabove. Rather the scope of the present invention is defined only by the claims which follow:

## Claims

1. A target recognition system operating on an array of images of a scene in which there are targets, the system comprising:
a. an automatic target recognition unit for recognizing possible targets in each of said images and for providing each with a cluster grade; and
b. a cluster recognizer for receiving a list of said possible targets from said automatic target recognition unit and for identifying clusters of said possible targets which are located within a small area and which all have cluster grades above a predefined threshold.

2. A target recognition system according to claim 1 and wherein said cluster recognizer comprises:
a. means for reviewing a window of said images and a predetermined number X of possible targets in said window which have the highest grades, and for generating an average cluster grade of the window, said means sliding said window across said array until the entire scene has been reviewed;
b. storage means for storing said X selected possible targets in each position of said window;
c. histogram means for generating a histogram of the average cluster grades produced for each position of the window;
d. means for selecting the windows having average cluster grades above the average of the histogram and for determining if there are any clusters among the selected windows.

3. A object recognition system operating on an array of images of a scene in which there are objects, the system comprising:
a. an automatic object recognition unit for recognizing possible objects in each of said images and for providing each with a cluster grade; and
b. a cluster recognizer for receiving a list of said possible objects from said automatic object recognition unit and for identifying clusters of said possible objects which are located within a small area and which all have cluster grades above a predefined threshold.

4. A object recognition system according to claim 3 and wherein said cluster recognizer comprises:
a. means for reviewing a window of said images and a predetermined number X of possible objects in said window which have the highest grades, and for generating an average cluster grade of the window, said means sliding said window across said array until the entire scene has been reviewed;
b. storage means for storing said X selected possible objects in each position of said window;
c. histogram means for generating a histogram of the average cluster grades produced for each position of the window;
d. means for selecting the windows having average cluster grades above the average of the histogram and for determining if there are any clusters among the selected windows.

5. A method for target recognition operating on an array of images of a scene in which there are targets, the method comprising the steps of:
a. recognizing possible targets in each of said images;
b. providing each possible target with a cluster grade; and
c. identifying clusters of said possible targets which are located within a small area and which all have cluster grades above a predefined threshold.

6. A method for target recognition system according to claim 5 and wherein said step of identifying clusters comprises the steps of:
a. reviewing a window of said images and a predetermined number X of possible targets in said window which have the highest grades, and generating an average cluster grade of the window, said window being slid across said array until the entire scene has been reviewed;
b. storing said X selected possible targets in each position of said window;
c. generating a histogram of the average cluster grades produced for each position of the window;
d. selecting the windows having average cluster grades above the average of the histogram; and
e. determining if there are any clusters among the selected windows.

7. A method for object recognition operating on an array of images of a scene in which there are objects, the method comprising the steps of:
a. recognizing possible objects in each of said images;
b. providing each possible object with a cluster grade; and
c. identifying clusters of said possible objects which are located within a small area and which all have cluster grades above a predefined threshold.

8. A method for object recognition system according to claim 5 and wherein said step of identifying clusters comprises the steps of:
a. reviewing a window of said images and a predetermined number X of possible objects in said window which have the highest grades, and generating an average cluster grade of the window, said window being slid across said array until the entire scene has been reviewed;
b. storing said X selected possible objects in each position of said window;
c. generating a histogram of the average cluster grades produced for each position of the window;
d. selecting the windows having average cluster grades above the average of the histogram; and
e. determining if there are any clusters among the selected windows.
